# EUROPEAN PATENT SPECIFICATION

(11) **EP 4 496 678 B1**
(45) Date of publication and mention of the grant of the patent: **12.08.2026**
(21) Application number: 23714104.9
(22) Date of filing: 15.03.2023
(51) Int. Cl.: B24D 3/28, B24D 11/02, B24D 11/00

(54) **CURABLE COMPOSITION, TREATED BACKING, COATED ABRASIVE ARTICLES INCLUDING THE SAME, AND METHODS OF MAKING AND USING THE SAME**
HÄRTBARE ZUSAMMENSETZUNG, BEHANDELTER TRÄGER, SCHLEIFMITTEL AUF UNTERLAGE, DIE DIESE ENTHALTEN UND VERFAHREN ZUR HERSTELLUNG UND VERWENDUNG DAVON
COMPOSITION DURCISSABLE, SUPPORT TRAITÉ, ARTICLES ABRASIFS REVÊTUS LES COMPRENANT ET LEURS PROCÉDÉS DE FABRICATION ET D'UTILISATION

(30) Priority: 21.03.2022 US 202263322020 P
(43) Date of publication of application: 29.01.2025
(73) Proprietor: 3M Innovative Properties Company, Saint Paul, Minnesota 55133-3427 (US)
(72) Inventor: LI, Junting, Saint Paul, Minnesota 55133-3427 (US); THURBER, Ernest L., Saint Paul, Minnesota 55133-3427 (US); LIU, Yuyang, Saint Paul, Minnesota 55133-3427 (US)
(74) Representative: Vossius & Partner Patentanwälte Rechtsanwälte mbB
(86) International application number: PCT/IB2023/052530
(87) International publication number: WO 2023/180877

(56) References cited:
- EP-A1- 1 664 150
- EP-A1- 1 907 476
- EP-A1- 2 326 460
- EP-B1- 1 904 577
- US-A1- 2004 029 511

## Description

### BACKGROUND

In general, coated abrasive articles have abrasive particles secured to a backing. More typically, coated abrasive articles comprise a backing having two major opposed surfaces and an abrasive layer secured to a major surface. The abrasive layer typically comprises abrasive particles and a binder, wherein the binder serves to secure the abrasive particles to the backing.

One common type of coated abrasive article has an abrasive layer comprising a make layer, a size layer, and abrasive particles. In making such a coated abrasive article, a make layer comprising a make layer precursor is applied to a major surface of the backing. Abrasive particles are then at least partially embedded into the make layer precursor (e.g., via electrostatic coating), and the make layer precursor is sufficiently cured (i.e., crosslinked) to secure the particles to the cured make layer precursor (i.e., the make layer). A size layer precursor is then applied over the make layer and abrasive particles, followed by at least partially curing the size layer precursor to provide a size layer. Some coated abrasive articles further comprise a supersize layer covering the abrasive layer. The supersize layer typically includes grinding aids and/or anti-loading materials.

Another common type of coated abrasive article comprises an abrasive layer secured to a major surface of a backing, wherein the abrasive layer is provided by applying a slurry comprised of a curable binder precursor including a curable composition and abrasive particles onto a major surface of a backing, and then curing the binder precursor.

Some coated abrasive articles further comprise a backing treatment such as a backsize layer (i.e., a coating on the major surface of the backing opposite the major surface having the abrasive layer), a presize layer, a tie layer (i.e., a coating between the abrasive layer and the major surface to which the abrasive layer is secured), and/or a saturant. Optionally, the backing may further comprise a subsize treatment. A subsize is similar to a saturant except that it is applied to a previously treated backing.

Conventional backing treatments used in coated abrasive constructions include resole phenolic resins, phenolic/latex blends, urea-formaldehyde, and melamine formaldehyde resins. Backing treatments such as these typically exhibit good adhesion to resole phenolic, urea-formaldehyde, and epoxy based make layers and slurry layers. However, since these types of backing treatments are typically only partially cured prior to the make coat application, they typically emit various volatiles such as water, phenol, and formaldehyde that can impart additional porosity to the abrasive layer, particles and/or interfere with curing of the make layer. During use, the temperature of coated abrasives typically rises due to frictional heating. Such heating may lead to problems such as the abrasive layer separating from the backing, whether the backing is treated or not.

Free-radically polymerizable compositions have been included in backing treatments, which can be polymerized using electromagnetic radiation (e.g., ultraviolet (UV) and/or visible light). However, free- radical polymerization can be inhibited by oxygen in the air, leading to an undercured surface and degraded abrading performance. Moreover, significant shrinkage of the free-radically polymerizable composition can occur leading to stress build-up and curling of the backing. WO 2005/026229 refers to a curable composition comprising, based on the total weight of components a) through e):
a) from 50 to 90 percent by weight of at least one epoxy resin preparable by reaction of epichlorohydrin with at least one of bisphenol A or bisphenol F; b) from 1 to 20 percent by weight of polyfunctional (meth) acrylate; c) dicyandiamide; d) photoinitiator; and e) optional epoxy cure catalyst.

### SUMMARY

Advantageously and unexpectedly, methods of making treated backings according to the present invention provide excellent backing flatness and adhesion to resole phenolic, urea-formaldehyde, and epoxy-based make layers, and formulations exhibit good resistance to surface oxygen inhibition. The present invention refers to a curable composition according to claim 1, a treated backing according to claim 3, a method of making a treated backing according to claim 4, a coated abrasive article according to claim 5, a method of abrading a workpiece according to claim 8 and a method of making a coated abrasive article according to claim 9.

Coated abrasives according to the present invention are useful for abrading a workpiece by a method comprising:
providing a coated abrasive article according to the present invention;
frictionally contacting at least a portion of the abrasive layer with at least a portion of a surface of the workpiece; and
moving at least one of the coated abrasive article or the workpiece relative to the other to abrade at least a portion of the surface.

As used herein:
"essentially free of" means containing less than one weight percent of (e.g., less than 0.1 weight percent of, 0.01 weight percent of, or 0 weight percent of);
"(meth)acryl" refers methacryl and/or acryl groups (i.e., 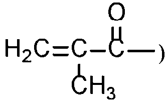 and/or 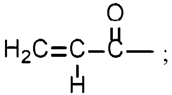 and
"weight percent" and "percent by weight" are interchangeable.

### BRIEF DESCRIPTION OF THE DRAWING

Fig. 1 is a cross-sectional side view of an exemplary coated abrasive article according to the present invention;
Fig. 2 is a cross-sectional side view of another exemplary coated abrasive article according to the present invention ; and
Fig. 3 is a cross-sectional side view of another exemplary coated abrasive article according to the present invention.

### DETAILED DESCRIPTION

Curable compositions according to the invention comprise, based on the total weight of components a) through g):
a) from 45 to 80 percent by weight of epoxy resin preparable by reaction of epichlorohydrin with at least one of bisphenol A or bisphenol F;
b) from 6 to 12 percent by weight of an at least trifunctional (meth)acrylate;
c) from 5 to 45 percent by weight of a polythiol;
d) 0 to 10 percent by weight of dicyandiamide;
e) 0.1 to 2 percent of free-radical photoinitiator;
f) 0.5 to 1 percent by weight of imidazole curative; and
g) 0 to 5 percent of phenolic resin.

Curable compositions according to the present invention comprise from 45 to 80 percent by weight of at least one epoxy resin preparable by reaction of epichlorohydrin with at least one of bisphenol A or bisphenol F, based on the total weight of components a) through g); however, in some embodiments, compositions according to the present invention may comprise from 45 to 55, or 70 to 80 percent by weight of at least one epoxy resin preparable by reaction of epichlorohydrin with at least one of bisphenol A or bisphenol F, based on the total weight of components a) through g). Typically, such resins have an average epoxy functionality of two, although higher and lower functionalities may also be useful. The epoxy resin may be liquid or solid. Whether liquid or solid, the epoxy resin may be chosen to be soluble in compositions according to the present invention. In some instances, heating compositions according to the present invention may facilitate dissolution of the epoxy resin.

Examples of useful epoxy resins include the epoxy resins formed by reaction of bisphenol A or bisphenol F with epichlorohydrin, and mixtures of such resins. Examples of bisphenol A-epichlorohydrin derived epoxy resins, bisphenol A diglycidyl ether (commonly referred to in the art as DGEBA) and bisphenol F diglycidyl ether and commercially available epoxy resins having the trade designation EPON (e.g., EPON RESIN 825, EPON 828, EPON RESIN 828, EPON RESIN 1001F, EPON RESIN 1002F, EPON RESIN 1004F, EPON RESIN 1009F, and EPON RESIN 2003), marketed by Hexion, Columbus, Ohio and many epoxy resins having the trade designation D.E.R. (e.g., D.E.R. 331, D.E.R. 332, D.E.R. 351, D.E.R. 352, D.E.R. 354, and D.E.R. 356), marketed by Olin Chemical Company, Clayton, Missouri.

Curable compositions according to the invention comprise from 6 to 12 percent by weight of at least one at least trifunctional (meth)acrylate, based on the total weight of components a) through g). By the phrase "at least one trifunctional (meth)acrylate" is meant a compound comprising at least three (e.g., For example, at least 3, 4, or even 5) (meth)acryloyloxy groups. For example, curable compositions according to the present invention may comprise from 6 to 10, or from 9 to 12 percent by weight of polyfunctional urethane (meth)acrylate, based on the total weight of components a) through g). Blends of more than one trifunctional (meth)acrylate can also be used.

Exemplary useful at least trifunctional (meth)acrylates include trimethylolpropane tri(meth)acrylate, glycerol tri(meth)acrylate, pentaerythritol tri(meth)acrylate, ethoxylated trimethylolpropane tri(meth)acrylate, pentaerythritol tetra(meth)acrylate, dipentaerythritol penta(meth)acrylate, sorbitol tri(meth)acrylate, sorbitol hexa(meth)acrylate, and mixtures thereof.

Curable compositions according to the invention comprises 5 to 45 percent by weight of at least one polythiol (i.e., an organic polythiol), based on the total weight of components a) to f). In some embodiments, the composition may comprise from 5 to 15 percent or even 35 to 45 percent by weight of more of one or more polythiols, based on the total weight of components a) to f). The polythiol may have 2, 3, 4, 5, 6,7, 8, or more sulfhydryl (-SH) groups.

Examples of polythiols having more than two thiol groups include propane-1,2,3-trithiol; 1,2-bis[(2-mercaptoethyl)thio]-3-mercaptopropane; tetrakis(7-mercapto-2,5-dithiaheptyl)methane; and trithiocyanuric acid.

Exemplary useful dithiols include 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), dimercaptodiethyl sulfide, methyl-substituted dimercaptodiethyl sulfide, dimethyl-substituted dimercaptodiethyl sulfide, dimercaptodioxaoctane, 1,5-dimercapto-3-oxapentane,benzene-1,2-dithiol, benzene-1,3-dithiol, benzene-1,4-dithiol, and tolylene-2,4-dithiol. Examples of polythiols having more than two thiol groups include propane-1,2,3-trithiol; 1,2-bis[(2-mercaptoethyl)thio]-3-mercaptopropane; tetrakis(7-mercapto-2,5-dithiaheptyl)methane; and trithiocyanuric acid.

Also useful are polythiols formed from the esterification of polyols with thiol-containing carboxylic acids or their derivatives. Examples of polythiols formed from the esterification of polyols with thiol-containing carboxylic acids or their derivatives include those made from the esterification reaction between thioglycolic acid or 3-mercaptopropionic acid and several polyols to form the mercaptoacetates or mercaptopropionates, respectively.

Examples of polythiol compounds that may be preferred because of relatively low odor level include, but are not limited to, esters of thioglycolic acid, α-mercaptopropionic acid, and β-mercaptopropionic acid with polyhydroxy compounds (polyols) such as diols (e.g., glycols), triols, tetrols, pentols, and hexols. Specific examples of such polythiols include, but are not limited to, ethylene glycol bis(thioglycolate), ethylene glycol bis(β-mercaptopropionate), trimethylolpropane tris(thioglycolate), trimethylolpropane tris(β-mercaptopropionate) and ethoxylated versions, pentaerythritol tetrakis(thioglycolate), pentaerythritol tetrakis(β-mercaptopropionate), and tris(hydroxyethyl)isocyanurate tris(β-mercaptopropionate). However, in those applications where concerns about possible hydrolysis of the ester exists, these polyols are typically less desirable.

Suitable polythiols also include those commercially available as THIOCURE PETMP (pentaerythritol tetra(3-mercaptopropionate)), TMPMP (trimethylolpropane tri(3-mercaptopropionate)), ETTMP (ethoxylated trimethylolpropane tri(3-mercaptopropionate) such as ETTMP 1300 and ETTMP 700), GDMP glycol di(3-mercaptopropionate), TMPMA (trimethylolpropane tri(mercaptoacetate)), TEMPIC (tris[2-(3-mercaptopropionyloxy)ethyl] isocyanurate), and PPGMP (propylene glycol 3-mercaptopropionate) from Bruno Bock Chemische Fabrik GmbH & Co. KG. A specific example of a polymeric polythiol is polypropylene-ether glycol bis(β-mercaptopropionate), which is prepared from polypropylene-ether glycol (e.g., PLURACOL P201, Wyandotte Chemical Corp.) and β-mercaptopropionic acid by esterification.

Suitable polythiols also include those preparable by esterification of polyols with thiol-containing carboxylic acids or their derivatives, those prepared from a ring-opening reaction of epoxides with H₂S (or its equivalent), those prepared from the addition of H₂S (or its equivalent) across carbon-carbon double bonds, polysulfides, polythioethers, and polydiorganosiloxanes. Specifically, these include the 3-mercaptopropionates (also referred to as β-mercaptopropionates) of ethylene glycol and trimethylolpropane (the former from Chemische Fabrik GmbH & Co. KG, the latter from Sigma-Aldrich); POLYMERCAPTAN 805C (mercaptanized castor oil); POLYMERCAPTAN 407 (mercaptohydroxy soybean oil) from Chevron Phillips Chemical Co. LLP, and CAPCURE, specifically CAPCURE 3-800 (a polyoxyalkylenetriol with mercapto end groups, from Gabriel Performance Products, Ashtabula, Ohio, and GPM-800, which is equivalent to CAPCURE 3-800, also from Gabriel Performance Products.

Oligomeric or polymeric polythioether polythiols useful for practicing the present invention are also described in, for example, U.S. Pat. Nos. 4,609,762 (Morris et al.), 5,225,472 (Cameron et al.), 5,912,319 (Zook et al.), 5,959,071 (DeMoss et al.), and 6,509,418 (Zook et al.).

In some embodiments, the polythiol is oligomeric or polymeric. Examples of useful oligomeric or polymeric polythiols include polythioethers and polysulfides. Polythioethers include thioether linkages (i.e., -S-) in their backbone structures. Polysulfides include disulfide linkages (i.e., -S-S-) in their backbone structures.

Other useful polythiols can be formed from the addition of hydrogen sulfide (H₂S) (or its equivalent) across carbon-carbon double bonds. For example, dipentene and triglycerides which have been reacted with H₂S (or its equivalent). Specific examples include dipentene dimercaptan and those polythiols available as POLYMERCAPTAN 358 (mercaptanized soybean oil) and POLYMERCAPTAN 805C (mercaptanized castor oil) from Chevron Phillips Chemical Co. LLP. At least for some applications, the preferred polythiols are POLYMERCAPTAN 358 and 805C since they are produced from largely renewable materials, i.e., the triglycerides, soybean oil and castor oil, and have relatively low odor in comparison to many thiols. Useful triglycerides have at least two sites of unsaturation, i.e., carbon-carbon double bonds, per molecule on average, and sufficient sites are converted to result in at least 2 thiols per molecule on average. In the case of soybean oil, this requires a conversion of approximately 42 percent or greater of the carbon-carbon double bonds, and in the case of castor oil this requires a conversion of approximately 66 percent or greater of the carbon-carbon double bonds. Typically, higher conversion is preferred, and POLYMERCAPTAN 358 and 805C can be obtained with conversions greater than approximately 60 percent and 95 percent, respectively. Useful polythiols of this type also include those derived from the reaction of H₂S (or its equivalent) with the glycidyl ethers of bisphenol A epoxy resins, bisphenol F epoxy resins, and novolac epoxy resins. A preferred polythiol of this type is QX11, derived from bisphenol A epoxy resin, from Japan Epoxy Resins (JER) as EPOMATE. Other polythiols suitable include those available as EPOMATE QX10 and EPOMATE QX20 from JER.

Still other useful polythiols are polysulfides that contain thiol groups such as those available as THIOKOL LP-2, LP-3, LP-12, LP-31, LP-32, LP-33, LP-977, and LP-980 from Toray Fine Chemicals Co., Ltd., and polythioether oligomers and polymers such as those described in PCT Publ. No. WO 2016/130673 A1 (DeMoss et al.).

Curable compositions according to the invention comprise an optional amount of dicyandiamide for accelerating the cure of the curable composition. For example, the curable composition may comprise from greater than or equal to 0 to 10 percent by weight of dicyandiamide, based on the total weight of components a) through g). Dicyandiamide is widely available commercially, for example, as marketed by Air Products and Chemicals, Allentown, Pennsylvania as AMICURE CG-1200 and AMICURE CG-1400.

Curable compositions according to the invention comprise an effective amount of photoinitiator for curing the composition. For example, the curable composition may comprise from 0.1 to 2 percent, or 0.3 to 1 percent, by weight of free-radical photoinitiator, based on the total weight of components a) through g).

Useful free-radical photoinitiator may be a single photoinitiator or a combination of two or more photoinitiators. Photoinitiators useful in the practice of invention include those known as useful for free-radical photocuring of (meth)acrylates. Exemplary photoinitiators include benzoin and its derivatives such as α-methylbenzoin; α-phenylbenzoin; α-allylbenzoin; α-benzylbenzoin; benzoin ethers such as benzil dimethyl ketal, benzoin methyl ether, benzoin ethyl ether, benzoin n-butyl ether; acetophenone and its derivatives such as 2-hydroxy-2-methyl-1-phenyl-1-propanone, and 1-hydroxycyclohexyl phenyl ketone, 2-methyl-1-[4-(methylthio)phenyl]-2-(4-morpholinyl)-1-propanone, and 2-benzyl-2-(dimethylamino)-1-[4-(4-morpholinyl)phenyl]-1- butanone.

Curable compositions according to the invention include 0.5 to 1 percent by weight of a 2-alkylimidazole (an epoxy curative) such as, for example, 2-ethylimidazole, and 2-ethyl-4-methylimidazole (e.g., as marketed as IMICURE EMI-2,4 by Air Products and Chemicals, Allentown, Pennsylvania, and 2-propylimidazole (e.g., as marketed under the trade designation CUREMOD 2-PI-60LIQ from Near Chemical Specialties Inc., Buffalo Grove, Illinois).

Curable compositions according to the invention include 0 to 5 percent by weight (i.e., it is optional), based on the total weight of components a) to g) of phenolic resin. In some embodiments, 4 to 5 percent by weight, based on the total weight of components a) to g). Useful phenolic resins may include novolac phenolic and/or resole phenolic resin(s).

Typically, novolac resins are made by reacting a phenolic monomer (e.g., phenol, cresol, xylenol, resorcinol, catechol, bisphenol A, naphthol, or a combination thereof) with an aldehyde in the presence of an acid catalyst, with the molar ratio of the aldehyde to phenol being less than one. Examples of aldehydes used to prepare novolacs include formaldehyde, acetaldehyde, propionaldehyde, glyoxal, and furfural. Typically, these novolac resins have a molecular weight ranging from 300 to 1,500, although higher and lower molecular weights may also be useful. Additionally, the starting phenolic monomer can be substituted with various groups such as alkyl, alkoxy, carboxyl, and sulfo, as long as there are at least two reactive sites remaining to form the novolac.

Many novolac phenolic resins are readily available from commercial suppliers including, for example, Georgia Pacific Resins, Atlanta, Georgia (e.g., as marketed under the trade designations "GP 2074", "GP 5300", "GP 5833", "RESI-FLAKE GP-2049", "RESI-FLAKE GP-2050", or "RESI-FLAKE GP-2211"); Bakelite AG, Frielendorf, Germany (e.g., as marketed under the trade designation "RUTAPHEN 8656F"); Borden Chemical, Inc (e.g., as marketed under the trade designations "DURITE 423A" or "DURITE SD1731"). While novolac resins are typically useful, resole phenolic resins may tend to interfere with curing of curable compositions according to the present invention, and if included should be used with discretion.

Curable compositions according to the present invention may further comprise an optional bireactive polymerizable component, for example, a compound having at least one free-radically polymerizable group, and at least one cationically polymerizable group. Bireactive compounds can be made, for example, by introducing at least one ethylenically unsaturated group into a compound that already contains one or more epoxy groups, or, conversely, by introducing at least one epoxy group into a compound that already contains one or more ethylenically unsaturated group.

Curable compositions according to the present invention may contain a variety of additives such as, for example, fillers, thickeners, tougheners, grinding aids, pigments, fibers, tackifiers, lubricants, wetting agents, surfactants, antifoaming agents, dyes, coupling agents, plasticizers, and suspending agents.

In applications in which low viscosity is desirable, such as, for example, as a backing treatment, curable compositions according to the present invention may be essentially free of dissolved thermoplastic polymers (e.g., thermoplastic polymers having a weight average molecular weight of 5,000 or more), as such materials tend to greatly increase viscosity, which may make coating processes difficult (e.g., saturating a porous backing).

Curable compositions according to the present invention may be applied to a variety of substrates using conventional methods such as, for example, roll coating (e.g., using soft rubber rolls), spraying, transfer coating, dip coating, screen printing, gravure coating, curtain coating, bar coating, knife coating, or die coating. Curable compositions may be applied to a substrate in a uniform or patterned manner, and may be continuous or discontinuous.

If utilizing curable compositions comprising solid components, such compositions may be prepared, for example, by mixing some or all of the various materials of the curable composition in a suitable vessel at an elevated temperature, for example, less than 100 °C, sufficient to liquify at least some of the materials so that they may be efficiently mixed, with stirring, to form the curable composition, but without thermally degrading the components.

Curable compositions may be cured by exposure to thermal energy, actinic radiation, or more typically a combination thereof. In such cases, curing of the curable composition typically begins upon exposing it to an appropriate source of actinic radiation (e.g., ultraviolet, visible, or particulate radiation), and may continue for a period thereafter.

Useful forms of thermal energy include, for example, heat and infrared radiation. Exemplary sources of thermal energy include ovens, heated rolls, hot air blowers, infrared lamps, and combinations thereof.

The choice of the source of actinic radiation is typically selected depending on the intended processing conditions, and to appropriately activate the photoinitiator. Exemplary useful sources of ultraviolet and visible radiation include mercury, xenon, carbon arc, tungsten filament lamps, and sunlight. Ultraviolet radiation, especially from a medium pressure mercury arc lamp or a microwave driven H-type, D-type, or V-type mercury lamp, such as of those commercially available from Fusion UV Systems, Gaithersburg, Maryland, is especially desirable.

Exposure times for the actinic radiation typically range, for example, from less than about 0.01 second to 1 minute or longer providing, for example, a total energy exposure from 0.1 to 10 Joules per square centimeter (J/cm²) depending upon the amount and the type of reactive components involved, the energy source, web speed, the distance from the energy source, and the thickness of the make layer precursor to be cured. Filters and/or dichroic reflectors may also be useful, for example, to reduce thermal energy that accompanies the actinic radiation.

If electron beam radiation is used, the dosage necessary is generally from less than 1 megarad to 100 megarads or more.

Curable compositions according to the present invention may be applied to a backing, for example, for use as a treated backing in the manufacture of coated abrasive articles. Such treated backings are typically prepared by applying a curable composition according to the present invention (i.e., a backing treatment precursor) to at least a portion of a backing and at least partially curing the curable composition. For example, if the backing has two opposed major surfaces, the curable composition may be applied in such a manner as to contact only one of the major surfaces or in such a manner as to contact both major surfaces (e.g., by saturating the fabric with curable composition or both applying a curable composition to each major surface of the backing).

Useful backings include, for example, fabrics such as nonwoven (e.g., including needletacked, meltspun, spunbonded, hydroentangled, or meltblown nonwoven fabrics), knitted, stitchbonded, and woven fabrics (e.g., cloth); paper; mesh; polymeric film (including primed films) such as polyolefin film (e.g., polypropylene including biaxially oriented polypropylene, polyester film, polyamide film, cellulose ester film); foil; foam (e.g., natural sponge material or polyurethane foam); combinations of two or more of these materials; and treated versions thereof. The backing may also be a laminate of two materials (e.g., paper/film, cloth/paper, film/cloth).

Useful fibrous backings can be made from any known fibers, whether natural, synthetic or a blend of natural and synthetic fibers. Examples of useful fiber materials include fibers or yarns comprising polyester (e.g., polyethylene terephthalate), polyamide (e.g., hexamethylene adipamide, polycaprolactam), polypropylene, acrylic (formed from a polymer of acrylonitrile), cellulose acetate, polyvinylidene chloride-vinyl chloride copolymers, vinyl chloride-acrylonitrile copolymers, graphite, polyimide, silk, cotton, linen, jute, hemp, or rayon. Useful fibers may be of virgin materials or of recycled or waste materials reclaimed from garment cuttings, carpet manufacturing, fiber manufacturing, or textile processing, for example. Useful fibers may be homogenous or a composite such as a bicomponent fiber (e.g., a co-spun sheath-core fiber). The fibers may be tensilized and crimped, but may also be continuous filaments such as those formed by an extrusion process.

Treated backings according to the present invention are typically flexible. The thickness of the backing generally ranges from about 0.02 to about 5 millimeters, desirably from about 0.05 to about 2.5 millimeters, and more desirably from about 0.1 to about 0.4 millimeter, although thicknesses outside of these ranges may also be useful, for example, depending on the intended use. The strength of the backing should be sufficient to resist tearing or other damage in use. The thickness and smoothness of the backing should also be suitable to provide the desired thickness and smoothness of the coated abrasive article, wherein such characteristics of the coated abrasive article may vary depending, for example, on the intended application or use of the coated abrasive article.

Treated backings may have any basis weight. Treated backings comprising fabric having a basis weight in a range of from 100 to 550 grams per square meter typically have good flexibility and may be well-suited for inclusion in coated abrasive articles, however higher and lower basis weights may also have good flexibility. Examples of such treated backings include those comprising fabric that has a basis weight in a range of from 200 to 400 grams per square meter, and those that have a basis weight in a range of from-250 to 370 grams per square meter.

The quantity of curable composition applied to the backing may be any amount, again depending upon the specific application.

Curable compositions and treated backings according to the present invention are also useful in the manufacture of coated abrasive articles, wherein they may provide good adhesion between the abrasive layer and the backing.

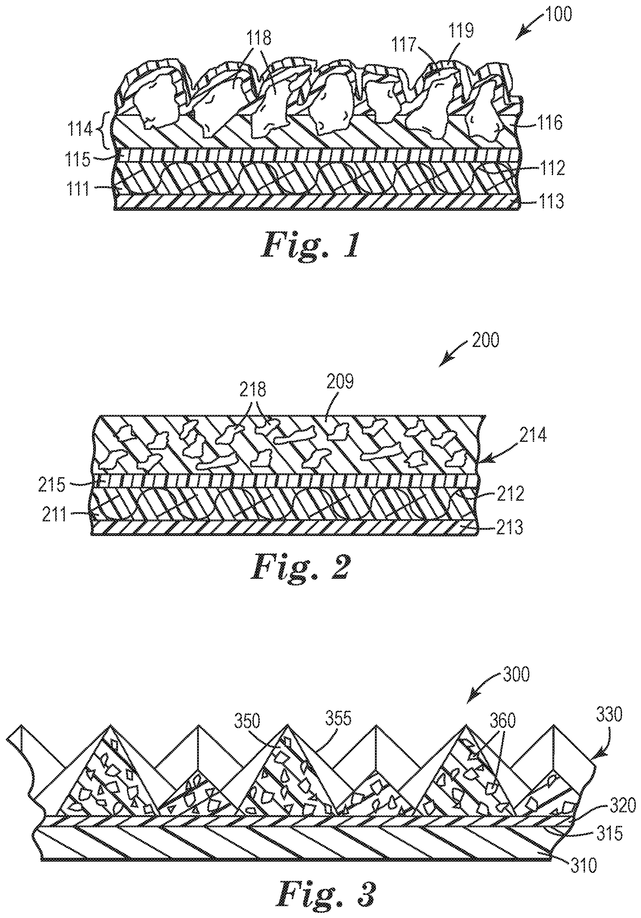

One such coated abrasive article is illustrated in Fig. 1. Referring now to Fig. 1, exemplary coated abrasive article 100 comprises backing 112. Backing 112 may optionally be saturated with saturant 111. Additionally, backing 112 may be treated with optional backsize layer 113 and/or optional presize layer 115. In the case that backing 112 is porous, backsize layer 113 and presize layer 115 penetrate into the backing, and may even contact each other within the porous interior of the backing in some cases. Overlaying presize layer 115 is abrasive layer 114 comprising make layer 116 in which are embedded abrasive grits 118 and size layer 117 which overlays make layer 116 and abrasive grits 118. Optional supersize layer 119 overlays size layer 117.

Another exemplary coated abrasive article according to the present invention Fig. 2. Referring now to Fig. 2, coated abrasive article 200 comprises backing 212. Backing 212 is treated with at least one of saturant 211 or presize layer 215. Additionally, backing 212 may be treated with optional backsize layer 213. In the case that backing 212 is porous, backsize layer 213 and presize layer 215 penetrate into the backing, and may even contact each other within the porous interior of the backing in some cases. Overlaying presize layer 215 is abrasive layer 214, which includes a plurality of abrasive grits 218 distributed throughout binder 209.

Reaction products of curable compositions according to the present invention may be used as backing treatment(s), for example, as one or more of a saturant, subsize, presize layer, or a backsize layer. The purpose of these materials is typically to seal the backing, protect yarn or fibers in the backing, and/or promote adhesion of other layer(s) to the backing. If the backing is a fabric, at least one of these materials is typically used. The addition of the presize layer or backsize layer may additionally result in a "smoother" surface on either the front and/or the backside of the backing.

For use in coated abrasive articles, the thickness of the backing generally ranges from 0.02 to 5 millimeters, for example, from 0.05 to 2.5 millimeters, or from 0.1 to 1 millimeter, although thicknesses outside of these ranges may also be useful.

The backing may also be a laminate of two materials (e.g., paper/film, cloth/paper, or film/cloth). The backing may also be a fibrous reinforced thermoplastic such as described, for example, as described, for example, in U.S. Pat. No. 5,417,726 (Stout et al.), or an endless spliceless belt, as described, for example, in U.S. Pat. No. 5,573,619 (Benedict et al.).

The backing may be a polymeric substrate having hooking stems projecting therefrom such as that described, for example, in U.S. Pat. No. 5,505,747 (Chesley et al.), or the backing may be a loop fabric such as that described, for example, in U.S. Pat. No. 5,565,011 (Follett et ^{al.)}^{.}

The choice of backing material may depend on the intended application of the coated abrasive article. The thickness and smoothness of the backing should also be suitable to provide the desired thickness and smoothness of the coated abrasive article, wherein such characteristics of the coated abrasive article may vary depending, for example, on the intended application or use of the coated abrasive article.

An antistatic material may be included in any of these backing treatment materials. The addition of an antistatic material can reduce the tendency of the coated abrasive article to accumulate static electricity when sanding wood or wood-like materials. Additional details regarding antistatic backings and backing treatments can be found in, for example, U.S. Pat. Nos. 5,108,463 (Buchanan et al.); 5,137,542 (Buchanan et al.); 5,328,716 (Buchanan); and 5,560,753 (Buchanan et ^{al.)}^{.}

In some instances, it may be desirable to incorporate a pressure-sensitive adhesive onto the backside of the coated abrasive article such that the resulting coated abrasive article can be secured to a backup pad. Exemplary pressure-sensitive adhesives include latex crepe, rosin, acrylic polymers, and copolymers including polyacrylate esters (e.g., poly(butyl acrylate)), vinyl ethers (e.g., poly(vinyl n-butyl ether)), alkyd adhesives, rubber adhesives (e.g., natural rubber, synthetic rubber, chlorinated rubber), and mixtures thereof.

To promote adhesion of binder resins to the backing, one or more surfaces of the backing may be modified by known methods including corona discharge, ultraviolet light exposure, electron beam exposure, flame discharge, and/or scuffing.

The basis weight of the make layer utilized may depend, for example, on the intended use(s), type(s) of abrasive particles, and nature of the coated abrasive article being prepared, but generally will be in the range of from 1, 2, or 5 to 20, 25, 400, or even 600 grams per square meter (i.e., g/m²). The curable make layer precursor may be applied by any known coating method for applying a make layer precursor to a backing, including, for example, roll coating, extrusion die coating, curtain coating, knife coating, gravure coating, and spray coating.

After applying a curable make layer precursor to the backing, and prior to solidification of the curable make layer precursor (e.g., by curing), abrasive particles are deposited onto the make layer.

Exemplary curable make layer precursors include phenolic resins, epoxy resins, acrylic monomers, cyanate resins, urethane resins, hide glue, and combinations thereof.

Exemplary useful abrasive particles include fused aluminum oxide based materials such as aluminum oxide, ceramic aluminum oxide (which may include one or more metal oxide modifiers and/or seeding or nucleating agents), and heat-treated aluminum oxide, silicon carbide, co-fused alumina-zirconia, diamond, ceria, titanium diboride, cubic boron nitride, boron carbide, garnet, flint, emery, sol-gel derived abrasive particles, and blends thereof. Examples of sol-gel abrasive particles include those described U.S. Pat. Nos. 4,314,827 (Leitheiser et al.); 4,518,397 (Leitheiser et al.); 4,623,364 (Cottringer et al.); 4,744,802 (Schwabel); 4,770,671 (Monroe et al.); 4,881,951 (Wood et al.); 5,011,508 (Wald et al.); 5,090,968 (Pellow); 5,139,978 (Wood); 5,201,916 (Berg et al.); 5,227,104 (Bauer); 5,366,523 (Rowenhorst et al.); 5,429,647 (Larmie); 5, 498,269 (Larmie); and 5,551,963 (Larmie). The abrasive particles may be in the form of, for example, individual particles, agglomerates, abrasive composite particles, and mixtures thereof.

Preferably, the abrasive particles (and especially the abrasive particles) comprise ceramic abrasive particles such as, for example, sol-gel-derived polycrystalline alpha alumina particles. Ceramic abrasive particles composed of crystallites of alpha alumina, magnesium alumina spinel, and a rare earth hexagonal aluminate may be prepared using sol-gel precursor alpha alumina particles according to methods described in, for example, U.S. Pat. No. 5,213,591 (Celikkaya et al.) and U.S. Publ. Pat. Appln. Nos. 2009/0165394 A1 (Culler et al.) and 2009/0169816 A1 (Erickson et al.). Further details concerning methods of making sol-gel-derived abrasive particles can be found in, for example, U.S. Pat. Nos. 4,314,827 (Leitheiser); 5,152,917 (Pieper et al.); 5,435,816 (Spurgeon et al.); 5,672,097 (Hoopman et al.); 5,946,991 (Hoopman et al.); 5,975,987 (Hoopman et al.); and 6,129,540 (Hoopman et al.); and in U.S. Publ. Pat. Appln. No. 2009/0165394 A1 (Culler et al.).

In some preferred embodiments, useful abrasive particles (especially in the case of the abrasive particles) may be shaped abrasive particles can be found in U.S. Pat. Nos. 5,201,916 (Berg); 5,366,523 (Rowenhorst (Re 35,570)); and 5,984,988 (Berg). U.S. Pat. No. 8,034,137 (Erickson et al.) describes alumina abrasive particles that have been formed in a specific shape, then crushed to form shards that retain a portion of their original shape features. In some embodiments, the abrasive particles are precisely-shaped (i.e., the particles have shapes that are at least partially determined by the shapes of cavities in a production tool used to make them. Details concerning such abrasive particles and methods for their preparation can be found, for example, in U.S. Pat. Nos. 8,142,531 (Adefris et al.); 8,142,891 (Culler et al.); 8,142,532 (Erickson et al.); 9,771,504 (Adefris); and in U.S. Pat. Appl. Publ. Nos. 2012/0227333 (Adefris et al.); 2013/0040537 (Schwabel et al.); and 2013/0125477 (Adefris). One particularly useful precisely-shaped abrasive particle shape is that of a platelet having three-sidewalls, any of which may be straight or concave, and which may be vertical or sloping with respect to the platelet base; for example, as set forth in the above cited references.

Surface coatings on the abrasive particles may be used to improve the adhesion between the abrasive particles and a binder material, or to aid in electrostatic deposition of the abrasive particles. In one embodiment, surface coatings as described in U.S. Pat. No. 5,352,254 (Celikkaya) in an amount of 0.1 to 2 percent surface coating to abrasive particle weight may be used. Such surface coatings are described in U.S. Pat. Nos. 5,213,591 (Celikkaya et al.); 5,011,508 (Wald et al.); 1,910,444 (Nicholson); 3,041,156 (Rowse et al.); 5,009,675 (Kunz et al.); 5,085,671 (Martin et al.); 4,997,461 (Markhoff-Matheny et al.); and 5,042,991 (Kunz et al.). Additionally, the surface coating may prevent shaped abrasive particles from capping. Capping is the term to describe the phenomenon where metal particles from the workpiece being abraded become welded to the tops of the abrasive particles. Surface coatings to perform the above functions are known to those of skill in the art.

In some embodiments, the abrasive particles may be selected to have a length and/or width in a range of from 0.1 micrometers to 3.5 millimeters (mm), more typically 0.05 mm to 3.0 mm, and more typically 0.1 mm to 2.6 mm, although other lengths and widths may also be used.

The abrasive particles may be selected to have a thickness in a range of from 0.1 micrometer to 1.6 mm, more typically from 1 micrometer to 1.2 mm, although other thicknesses may be used. In some embodiments, abrasive particles may have an aspect ratio (length to thickness) of at least 2, 3, 4, 5, 6, or more.

Abrasive particles may be independently sized according to an abrasives industry recognized specified nominal grade. Exemplary abrasive industry recognized grading standards include those promulgated by ANSI (American National Standards Institute), FEPA (Federation of European Producers of Abrasives), and JIS (Japanese Industrial Standard). Such industry accepted grading standards include, for example: ANSI 4, ANSI 6, ANSI 8, ANSI 16, ANSI 24, ANSI 30, ANSI 36, ANSI 40, ANSI 50, ANSI 60, ANSI 80, ANSI 100, ANSI 120, ANSI 150, ANSI 180, ANSI 220, ANSI 240, ANSI 280, ANSI 320, ANSI 360, ANSI 400, and ANSI 600; FEPA P8, FEPA P12, FEPA P16, FEPA P24, FEPA P30, FEPA P36, FEPA P40, FEPA P50, FEPA P60, FEPA P80, FEPA P100, FEPA P120, FEPA P150, FEPA P180, FEPA P220, FEPA P240, FEPA P320, FEPA P400, FEPA P500, FEPA P600, FEPA P800, FEPA P1000, FEPA P1200; FEPA F8, FEPA F12, FEPA F16, and FEPA F24;.and JIS 8, JIS 12, JIS 16, JIS 24, JIS 36, JIS 46, JIS 54, JIS 60, JIS 80, JIS 100, JIS 150, JIS 180, JIS 220, JIS 240, JIS 280, JIS 320, JIS 360, JIS 400, JIS 600, JIS 800, JIS 1000, JIS 1500, JIS 2500, JIS 4000, JIS 6000, JIS 8000, and JIS 10,000. More typically, the crushed aluminum oxide particles and the non-seeded sol-gel derived alumina-based abrasive particles are independently sized to ANSI 60 and 80, or FEPA F36, F46, F54 and F60 or FEPA P60 and P80 grading standards.

Alternatively, the abrasive particles can be graded to a nominal screened grade using U.S.A. Standard Test Sieves conforming to ASTM E-11 "Standard Specification for Wire Cloth and Sieves for Testing Purposes". ASTM E-11 prescribes the requirements for the design and construction of testing sieves using a medium of woven wire cloth mounted in a frame for the classification of materials according to a designated particle size. A typical designation may be represented as -18+20 meaning that the shaped abrasive particles pass through a test sieve meeting ASTM E-11 specifications for the number 18 sieve and are retained on a test sieve meeting ASTM E-11 specifications for the number 20 sieve. In one embodiment, the shaped abrasive particles have a particle size such that most of the particles pass through an 18 mesh test sieve and can be retained on a 20, 25, 30, 35, 40, 45, or 50 mesh test sieve. In various embodiments, the shaped abrasive particles can have a nominal screened grade comprising: -18+20, -20+25, -25+30, -30+35, -35+40, -40+45, -45+50, -50+60, -60+70, -70+80, -80+100, -100 +120, -120+140, -140+170, -170+200, -200+230, -230+270, -270+325, -325+400, -400+450, -450 +500, or -500+635. Alternatively, a custom mesh size could be used such as -90+100. Exemplary agglomerates are described, for example, in U.S. Pat. Nos. 4,652,275 (Bloecher et al.) and 4,799,939 (Bloecher et ^{al.)}^{.} It is also within the scope of the present invention to use diluent erodible agglomerate grains as described, for example, in U.S. Pat. No. 5,078,753 (Broberg et ^{al.)}^{.} Abrasive composite particles comprise abrasive grains in a binder.

Exemplary abrasive composite particles are described, for example, in U.S. Pat. No. 5,549,962 (Holmes et ^{al.)}^{.}

Coating weights for the abrasive particles may depend, for example, on the specific coated abrasive article desired, the process for applying the abrasive particles, and the size of the abrasive particles, but typically range from 1 to 2000 g/m².

A size layer precursor is then applied over the at least partially cured make layer and abrasive particles, followed by at least partially curing the size layer precursor to provide a size layer. Exemplary size layer precursors include phenolic resins, epoxy resins, acrylic monomers, and combinations thereof. The size layer precursor may be applied by applying and curing a curable size layer precursor using any known coating method including, for example, roll coating, extrusion die coating, curtain coating, or spray coating.

The basis weight of the size layer will also necessarily vary depending on the intended use(s), type(s) of abrasive particles, and nature of the coated abrasive article being prepared, but generally will be in the range of from 1 or 5 g/m² to 300, or even 800 g/m², or more.

If present, the optional supersize typically includes grinding aids and/or anti-loading materials. The optional supersize may serve to prevent or reduce the accumulation of swarf (the material abraded from a workpiece) between abrasive particles, which can dramatically reduce the cutting ability of the coated abrasive disc. Useful supersizes typically include a grinding aid (e.g., potassium tetrafluoroborate), metal salts of fatty acids (e.g., zinc stearate or calcium stearate), salts of phosphate esters (e.g., potassium behenyl phosphate), phosphate esters, urea-formaldehyde resins, mineral oils, crosslinked silanes, crosslinked silicones, and/or fluorochemicals.

The optional supersize can be applied to the size layer using any known coating method including, for example, roll coating, extrusion die coating, curtain coating, or spray coating.

Useful supersizes are further described, for example, in U. S. Pat. No. 5,556,437 (Lee et al.). Typically, the amount of grinding aid incorporated into coated abrasive products is about 50 to about 400 gsm, more typically about 80 to about 300 gsm. The supersize may contain a binder such as for example, those used to prepare the size or make layer, but it need not have any binder.

Further details concerning coated abrasive articles comprising abrasive particles and make, size, and optional supersize layers are well known and are described, for example, in U.S. Pat. Nos. 4,734,104 (Broberg); 4,737,163 (Larkey); 5,203,884 (Buchanan et al.); 5,152, 917 (Pieper et al.); 5,378,251 (Culler et al.); 5,417,726 (Stout et al.); 5,436,063 (Follett et al.); 5,496,386 (Broberg et al.); 5,609,706 (Benedict et al.); 5,520,711 (Helmin); 5,954, 844 (Law et al.); 5,961,674 (Gagliardi et al.); 4,751,138 (Bange et al.); 5,766,277 (DeVoe et al.); 6,077,601 (DeVoe et al.); 6,228,133 (Thurber et al.); and 5,975,988 (Christianson).

In some embodiments of coated abrasive articles according to the present invention, the abrasive layer comprises a dispersion of abrasive particles and binder that is the reaction product of a curable composition according to the present invention (typically coated as a slurry). Slurry coating techniques are well known in the abrasive art, and include those described, for example, in U.S. Patent Nos. 5,378,251 (Culler et al.); 5,942,015 (Culler et al.); and 6,277,160 (Stubbs et ^{al.)}^{.}

In some embodiments of coated abrasive articles according to the present invention , the abrasive layer comprises abrasive composites, which in some embodiments are precisely-shaped.

Accordingly, in another exemplary embodiment, a coated abrasive article according to the present invention may have an abrasive layer that comprises precisely-shaped abrasive composites (e.g., a structured abrasive article). Referring now to Fig. 3, exemplary coated abrasive article 300 has backing 310, backing treatment 320 (e.g., a presize or tie layer) according to the present invention secured to major surface 315 of backing 310, and abrasive layer 330 secured to tie layer 320. Abrasive layer 330 includes a plurality of precisely-shaped abrasive composites 355. The abrasive composites comprise abrasive particles 360 dispersed in binder 350.

In making such a coated abrasive article, a slurry comprising a curable binder precursor and abrasive particles may be applied to a tool having a plurality of precisely-shaped cavities therein. The slurry is then at least partially polymerized and adhered to the tie layer, for example, by adhesive or addition polymerization of the slurry. Suitable binder precursors and abrasive particles include, for example, those listed hereinabove.

The abrasive composites may be of any three-dimensional shape that results in at least one of a raised feature or recess on the exposed surface of the abrasive layer. Useful shapes include, for example, cubic, prismatic, pyramidal (e.g., square pyramidal or hexagonal pyramidal), truncated pyramidal, conical, cruciform, hemispherical, frustoconical. Combinations of differently shaped and/or sized abrasive composites may also be used. The abrasive layer of the structured abrasive may be continuous or discontinuous.

For fine finishing applications, the density of abrasive composites in the abrasive layer is typically in a range of from at least 1,000, 10,000, or even at least 20,000 abrasive composites per square inch (.e., at least 150, 1,500, or even 7,800 abrasive composites per square centimeter) up to and including 50,000, 70,000, or even as many as 100,000 abrasive composites per square inch (up to and including 7,800, 11,000, or even as many as 15,000 abrasive composites per square centimeter), although greater or lesser densities of abrasive composites may also be used.

Further details concerning coated abrasive articles having abrasive layers comprising precisely-shaped abrasive composites may be found, for example, in U.S. Pat. Nos. 5,152,917 (Pieper et al.); 5,435,816 (Spurgeon et al.); 5,672,097 (Hoopman); 5,681,217 (Hoopman et al.); 5,851,247 (Stoetzel et al.); and 6,139,594 (Kincaid et ^{al.)}^{.}

Coated abrasive articles according to the present invention can be converted, for example, into belts, tapes, rolls, discs (including perforated discs), and/or sheets. For belt applications, two free ends of the abrasive sheet may be joined together using known methods to form a spliced belt. A spliceless belt may also be formed as described, for example, in U.S. Pat. No. 5,573,619 (Benedict et ^{al.)}^{.}

Coated abrasive articles according to the present invention are useful for abrading a workpiece. One such method includes frictionally contacting at least a portion of the abrasive layer of a coated abrasive article with at least a portion of a surface of the workpiece, and moving at least one of the coated abrasive article or the workpiece relative to the other to abrade at least a portion of the surface.

Examples of workpiece materials include metal, metal alloys, exotic metal alloys, ceramics, glass, wood, wood-like materials, composites, painted surfaces, plastics, reinforced plastics, stone, and/or combinations thereof. The workpiece may be flat or have a shape or contour associated with it. Exemplary workpieces include metal components, plastic components, particleboard, camshafts, crankshafts, furniture, and turbine blades.

Coated abrasive articles according to the present invention may be used by hand and/or used in combination with a machine. At least one or both of the coated abrasive article and the workpiece is generally moved relative to the other when abrading.

Abrading may be conducted under wet or dry conditions. Exemplary liquids for wet abrading include water, water containing conventional rust inhibiting compounds, lubricant, oil, soap, and cutting fluid. The liquid may also contain defoamers, degreasers, and/or the like.

### SELECT EMBODIMENTS

The present invention provides a curable composition according to claim 1, a treated backing according to claim 3, a coated abrasive article according to claim 5, a method according to claims 4, 8 and 9.

Embodiments of the invention are defined in the appended claims.

The present application further discloses a treated backing comprising a fabric having a backing treatment contacting at least a portion thereof, wherein the backing treatment comprises a reaction product of a curable composition comprising, based on the total weight of components a) through g):
a) from 45 to 80 percent by weight of epoxy resin preparable by reaction of epichlorohydrin with at least one of bisphenol A or bisphenol F;
b) from 6 to 12 percent by weight of an at least trifunctional (meth)acrylate;
c) from 5 to 45 percent by weight of a polythiol;
d) from 0 to 10 percent by weight of dicyandiamide;
e) 0.1 to 2 percent of free-radical photoinitiator;
f) 0.5 to 1 percent by weight of 2-alkylimidazole; and
g) 0 to 5 percent of phenolic resin, wherein the curable composition may be essentially free of phenolic resin; and/or wherein the curable composition may be essentially free of dissolved thermoplastic polymer; and/or wherein the curable composition may be essentially free of dicyandiamide and,

wherein the fabric comprises two opposed major surfaces, and the backing treatment is in contact with both of the major surfaces or
wherein the treated backing comprises two opposed major surfaces, and the backing treatment is in contact with only one of the major surfaces.

The present application further discloses a method of making a treated backing comprising contacting at least a portion thereof, wherein the backing treatment comprises a reaction product of a curable composition comprising, based on the total weight of components a) through g):
a) from 45 to 80 percent by weight of epoxy resin preparable by reaction of epichlorohydrin with at least one of bisphenol A or bisphenol F;
b) from 6 to 12 percent by weight of an at least trifunctional (meth)acrylate;
c) from 5 to 45 percent by weight of a polythiol;
d) from 0 to 10 percent by weight of dicyandiamide;
e) 0.1 to 2 percent of free-radical photoinitiator;
f) 0.5 to 1 percent by weight of 2-alkylimidazole; and
g) 0 to 5 percent of phenolic resin, wherein the curable composition is essentially free of phenolic resin; and/or wherein the curable composition is essentially free of dissolved thermoplastic polymer;

and/or wherein the curable composition is essentially free of dicyandiamide and
wherein the fabric comprises two opposed major surfaces, and the backing treatment is in contact with both of the major surfaces and/ or
wherein the treated backing comprises two opposed major surfaces, and the backing treatment is in contact with only one of the major surfaces.

The present application further discloses a coated abrasive article comprising an abrasive layer secured to a major surface of a treated backing, wherein the abrasive layer comprises abrasive particles retained in a binder wherein the treated backing comprises at least one of a presize layer, a saturant, or a subsize layer, or a tie layer that comprises a reaction product of components comprising, based on the total weight of components a) through g):
a) from 45 to 80 percent by weight of epoxy resin preparable by reaction of epichlorohydrin with at least one of bisphenol A or bisphenol F;
b) from 6 to 12 percent by weight of an at least trifunctional (meth)acrylate;
c) from 5 to 45 percent by weight of a polythiol;
d) from 0 to 10 percent by weight of dicyandiamide;
e) 0.1 to 2 percent of free-radical photoinitiator;
f) 0.5 to 1 percent by weight of 2-alkylimidazole; and
g) 0 to 5 percent of phenolic resin, wherein the binder may be essentially free of phenolic resin; and/or

wherein the binder may be essentially free of dissolved thermoplastic polymer; and/or wherein the binder may be essentially free of dicyandiamide; and/ or
wherein the treated backing may comprises a fabric having a basis weight in a range of from 200 to 400 grams per square meter and
wherein the abrasive particles are dispersed in a binder.

The present application further discloses a coated abrasive article, wherein the abrasive layer preferably comprises abrasive composites.

The present application further discloses a coated abrasive article, wherein the abrasive layer preferably comprises precisely-shaped abrasive composites.

### EXAMPLES

Unless stated otherwise, all other reagents were obtained, or are available from fine chemical vendors such as Sigma-Aldrich Company, St. Louis, Missouri, or may be synthesized by known methods.

Unit Abbreviations used in the Examples: gsm = grams per square meter, °C = degrees Celsius; cm = centimeter; mm = millimeter; µm = micrometer; fpm = feet per minute; and kV = kilovolts.

Table 1, below, reports material used in the Examples.

**TABLE 1**

| | |
|---|---|
| PFR | Phenol-formaldehyde resin having a phenol to formaldehyde molar ratio of 1:1.5-2.1, and catalyzed with 2.5 percent by weight potassium hydroxide |
| EPOXY | Bisphenol A-based liquid epoxy resin available as Epon 828 from Hexion, Columbus, Ohio |
| PETMP | Pentaerythritol tetra(3-mercaptopropionate) available from TCI America, Inc., Portland, Oregon |
| TMPTA | Trimethylolpropane triacrylate available from Sartomer USA, LLC., Exton, Pennsylvania |
| BDK | 2,2-dimethoxy-2-phenylacetophenone available as Omnirad 651 from IGM Resins USA Inc., Charlotte, North Carolina |
| NPR | Novolac phenolic resin available as RUTAPHEN 8656 from Hexion, Columbus, Ohio |
| DCDA | Dicyandiamide available as Dicynex 1400B from Evonik, Mapleton, Illinois |
| 2-PI | 2-Propylimidazole available as Curemod 2-PI-60LIQ from Near Chemical Specialties Inc., Buffalo Grove, Illinois |
| FIL1 | Calcium carbonate available as HUBERCARB Q325 from Hubercarb Engineered Materials, Atlanta, Georgia |
| FIL2 | Calcium silicate available as M400 WOLLASTOCOAT from NYCO, Willsboro, New York. |
| FIL3 | Trisodium hexafluoroaluminate available as Cryolite RTN-C from Freebee A/S, Nyborg, Denmark. |
| PIG1 | Iron oxide available as KROMA SYNTHETIC IRON OXIDE RED RO3097 from Venator Americas LLC, Woodlands, Texas. |
| PIG2 | Carbon black aqueous dispersion available as KW3729 AQUIS CARBON BLACK from Heucotech Ltd., Fairless Hills, Philadelphia |
| BCZ | Backsize resin, prepared by mixing 51.60 parts by weight of PFR, 42.35 parts by weight of FIL1, 1.37 parts by weight of PIG1, 1.06 parts by weight of PIG2, 3.62 parts by weight of tap water |
| MRI1 | Make resin 1, prepared by mixing 51.84 parts by weight of PFR, 42.12 parts by weight of FIL2, and 6.04 parts by weight of tap water |
| SZ1 | Size resin 1, prepared by mixing 42.11 parts by weight of PFR, 22.14 parts by weight of FIL2, 22.14 parts by weight of FIL3, 1.55 parts by weight of PIG1, and 12.06 parts by weight of tap water |
| HPC | Heatset polyester cloth backing, untreated polyester cloth having a weight of 300-400 gsm available as POWERSTRAIT from Milliken & Company, Spartanburg, South Carolina, pre-heatset through a tunnel oven at 220-240 °C for 1.5 minutes |
| PCC | Polycotton cloth backing, open-end drill polyester/cotton cloth having a weight of 220-254 gsm obtained from Milliken & Company, Spartanburg, South Carolina |
| BAO | FEPA grade 40 aluminum oxide abrasive mineral, available as Duralum G52 40 Brown Aluminum Oxide from Washington Mills Electro Minerals Corporation, Niagara Falls, New York |

### Backing Treatment

Cloth backing (HPC or PCC) was pre-cut into 11.4 cm x 25.4 cm rectangle sheets. A treatment solution was pre-heated to 60 °C and coated on the filling-yarn rich side (technical back) of the cloth sheet using a draw-down scraper at a gap of 76.2 µm. The coated sample was immediately taken for UV irradiation under an H bulb at 300 WPI, 12 fpm, then finally cured in the lab Mathis oven at 140 °C or 170 °C for 2 minutes and 15 seconds based on the example requirement. The sample was backsized on the warp-yarn rich side (technical face) with BCZ using a draw-down scraper at a gap of 76.2 µm, then dried in the oven under the following conditions: 110 °C for 1 min and then 130 °C for 2 min. The backing flatness was visually checked. All Example backings exhibited improved flatness compares to the Comparative examples.

### Stripback Test

A fully treated backing was coated with MR1 using a draw-down scraper at a gap of 101.6 µm, followed by drop-coat of BAO on the top to saturate the surface. The sample was cured at 93 °C and 103 °C for an hour, respectively. Then SZ1 was applied on the abrasive side targeting at a coating weight of 544 gsm. After the overnight final cure at 103 °C, the coated abrasive sample was ready for stripback test.

A 17.8 cmx7.6 cmx6 mm thick wooden board was coated with a layer of TECHNOMELT 8633 hot melt adhesive (Henkel USA, Stamford, CT) dispensed through a hot melt adhesive glue gun. A 10 cm section of a 17.78 cm x 2.54 cm strip of the coated abrasive to be tested was partially overlaid onto the molten laminating composition with the abrasive side facing the laminating composition. The abrasive Strip was then pressed into position and then the assembly was cooled to 25 °C.

The wooden board was mounted horizontally into the upper jaws of a tensile testing machine (a SINTECH 6W tensile testing apparatus from MTS Systems Corporation, Eden Prairie, Minnesota). The free end of the coated abrasive was then attached to the lower jaws of the tensile tester and, at a rate of 0.5 mm/second, the lower jaws pulled the coated abrasive from the wooden board at an angle of 90 degrees. The force, expressed in Newtons per centimeter (N/cm) of Sample width, necessary to cause failure of the test Specimen was reported. The test was run at the indicated temperature.

### EXAMPLE 1

66.71 parts by weight of EPOXY was mixed with 8.50 parts by weight of TMPTA at room temperature until a homogeneous state was achieved using a mechanical stirrer, and then 1.00 parts by weight of BDK was added during stirring. The mixture was heated to 60 °C. After BDK was completely dissolved, 4.45 parts by weight of NPR was added, and the mixture was mixed at 60 °C until homogeneous. Then 11.56 parts by weight of PETMP, 7.12 parts by weight of DCDA and 0.67 parts by weight of 2-PI were added and mixed until homogeneous. The obtain solution was used to treat HPC and cured at 170 °C for stripback test as described above, resulting in SB-1-P170.

### EXAMPLE 2

70.69 parts by weight of EPOXY was mixed with 8.50 parts by weight of TMPTA at room temperature until homogeneous using a mechanical stirrer, and then 1.00 parts by weight of BDK was added during stirring. The mixture was heated to 60 °C. After BDK was completely dissolved, 11.56 parts by weight of PETMP, 7.54 parts by weight of DCDA and 0.71 parts by weight of 2-PI were added and mixed until homogeneous. The obtain solution was used to treat HPC and cured at 170 °C for stripback test as described above, resulting in SB-2-P170.

### EXAMPLE 3

The treatment solution was mixed through the same procedure as Example 2 but with a different composition ratio: 75.14 parts by weight of EPOXY, 10.33 parts by weight of TMPTA, 5.65 parts by weight of PETMP, 0.15 parts by weight of BDK, 8.01 parts by weight of DCDA and 0.75 parts by weight of 2-PI. The obtain solution was used to treat HPC and cured at 170 °C for stripback test as described above, resulting in SB-3-P170.

### EXAMPLE 4

The treatment solution was mixed through the same procedure as Example 2 but with a different composition ratio: 75.00 parts by weight of EPOXY, 10.33 parts by weight of TMPTA, 5.62 parts by weight of PETMP, 0.30 parts by weight of BDK, 8.00 parts by weight of DCDA and 0.75 parts by weight of 2-PI. The obtain solution was used to treat HPC and cured at 170 °C for stripback test as described above, resulting in SB-4-P170.

### EXAMPLE 5

47.44 parts by weight of EPOXY was mixed with 11.21 parts by weight of TMPTA at room temperature until homogeneous using a mechanical stirrer, and then 0.33 parts by weight of BDK was added during stirring. The mixture was heated to 60 °C. After BDK was completely dissolved, 40.27 parts by weight of PETMP and 0.75 parts by weight of 2-PI were added and mixed until homogeneous. The obtain solution was used to treat HPC and PCC and cured at 140 °C or 170 °C for stripback test as described above, resulting in SB-5-P170, SB-5-P140 and SB-5-PC140, respectively.

### COMPARATIVE EXAMPLE A

75.19 parts by weight of EPOXY was mixed with 10.03 parts by weight of TMPTA at room temperature until homogeneous using a mechanical stirrer, and then 1.00 parts by weight of BDK was added during stirring. The mixture was heated to 60 °C. After BDK was completely dissolved, 5.01 parts by weight of NPR was added, and the mixture was mixed at 60 °C until homogeneous. Then 8.02 parts by weight of DCDA and 0.75 parts by weight of 2-PI were added and mixed until homogeneous. The obtain solution was used treat HPC and cured at 170 °C for stripback test as described above, resulting in SB-P-Comp.

### COMPARATIVE EXAMPLE B

A comparative PCC backing had no presize treatment, but was only backsized as described above for stripback test, resulting in SB-PC-Comp.

Table 2, below, reports results of stripback test results of Examples 1 to 6 and Comparative Examples A and B.

**TABLE 2**

| Replicates | SB-1-P170 | SB-2-P170 | SB-3-P170 | SB-4-P170 | SB-5-P170 | SB-5-P140 | SB-5-PC140 | SB-P-Comp | SB-PC-Comp |
|---|---|---|---|---|---|---|---|---|---|
| | PEEL FORCE FROM STRIPBACK TEST (N/cm) | | | | | | | | |
| 1 | 408.38 | 416.29 | 359.79 | 412.00 | 425.56 | 421.60 | 293.24 | 421.94 | 282.61 |
| 2 | 400.02 | 400.47 | 351.66 | 390.19 | 410.87 | 396.40 | 280.35 | 396.86 | 266.45 |
| 3 | 421.60 | 431.89 | 372.56 | 420.02 | 429.63 | 427.03 | 298.66 | 392.45 | 266.68 |
| 4 | 409.63 | 425.78 | 352.90 | 392.22 | 405.11 | 395.73 | 280.58 | 385.56 | 260.35 |
| 5 | | 415.95 | 347.48 | 435.73 | 412.79 | 411.21 | 284.20 | 394.37 | 284.87 |
| 6 | | 403.41 | 345.89 | 414.60 | 401.26 | 397.99 | 272.10 | 377.87 | 276.96 |
| 7 | | 434.37 | 365.33 | 435.95 | 418.78 | 427.93 | 290.98 | 404.43 | 262.84 |
| 8 | | 419.23 | 348.49 | 411.43 | 404.09 | 397.20 | 282.50 | | 254.02 |
| Average | 409.91 | 418.42 | 355.51 | 414.02 | 413.51 | 409.38 | 285.33 | 396.21 | 269.35 |

Various modifications and alterations of this invention may be made by those skilled in the art without departing from the scope of the invention as defined in the appended claims.

## Claims

1. A curable composition comprising components comprising, based on the total weight of components a) through g):
a) from 45 to 80 percent by weight of epoxy resin preparable by reaction of epichlorohydrin with at least one of bisphenol A or bisphenol F;
b) from 6 to 12 percent by weight of an at least trifunctional (meth)acrylate;
c) from 5 to 45 percent by weight of a polythiol;
d) from 0 to 10 percent by weight of dicyandiamide;
e) 0.1 to 2 percent of free-radical photoinitiator;
f) 0.5 to 1 percent by weight of 2-alkylimidazole; and
g) 0 to 5 percent of phenolic resin.

2. A curable composition according to claim 1,
wherein the curable composition is essentially free of phenolic resin; and/or
wherein the curable composition is essentially free of dissolved thermoplastic polymer; and/or
wherein the curable composition is essentially free of dicyandiamide;
wherein "essentially free of" means containing less than one weight percent of phenolic resin, dissolved thermoplastic polymer, or dicyandiamide, respectively.

3. A treated backing comprising a fabric having a backing treatment contacting at least a portion thereof, wherein the backing treatment comprises a reaction product of a curable composition according to claim 1 or 2.

4. A method of making a treated backing comprising:
contacting at least a portion of a fabric with a curable composition according to claim 1 or 2; and
at least partially curing the curable composition.

5. A coated abrasive article comprising an abrasive layer secured to a major surface of a treated backing, wherein the abrasive layer comprises abrasive particles retained in a binder wherein the treated backing comprises at least one of a presize layer, a saturant, or a subsize layer, or a tie layer that comprises a reaction product of the curable composition according to claim 1 or 2.

6. A coated abrasive article according to claim 5, wherein the abrasive layer comprises a make layer disposed on at least a portion of the treated backing, abrasive particles partially embedded in the make layer, and a size layer at least partially overlaying the make layer and abrasive particles.

7. A coated abrasive article according to claim 6, further comprising a supersize layer at least partially disposed on the size layer.

8. A method of abrading a workpiece comprising:
providing a coated abrasive article according to claim 5;
frictionally contacting at least a portion of the abrasive layer with at least a portion of a surface of the workpiece; and
moving at least one of the coated abrasive article or the workpiece relative to the other to abrade at least a portion of the surface.

9. A method of making a coated abrasive article comprising:
disposing a curable backing treatment precursor on at least a portion of a backing, the curable backing treatment precursor comprising the curable composition according to claim 1 or 2;
at least partially curing the curable backing treatment precursor to provide a treated backing; and
securing an abrasive layer to a major surface of the treated backing, wherein the abrasive layer comprises abrasive particles retained in a binder.

10. A method according to claim 9, wherein the treated backing comprises at least one of a presize layer, a subsize layer, or a saturant.

11. A treated backing according to claim 3, a method according to claim 4, a coated abrasive article according to claim 5, or a method according to claim 9, wherein the backing comprises fabric that has a basis weight in a range of from 200 to 400 grams per square meter.

12. A method according to claim 9, wherein the abrasive layer comprises a make layer disposed on at least a portion of the treated backing, abrasive particles partially embedded in the make layer, and a size layer at least partially overlaying the make layer and abrasive particles.

13. A method according to claim 12, further comprising a supersize layer at least partially disposed on the size layer.

## Patentansprüche

1. Eine härtbare Zusammensetzung, umfassend Komponenten, umfassend bezogen auf das Gesamtgewicht der Komponenten a) bis g):
a) von 45 bis 80 Gewichtsprozent Epoxidharz, das durch Umsetzung von Epichlorhydrin mit mindestens einem von Bisphenol A oder Bisphenol F herstellbar ist;
b) von 6 bis 12 Gewichtsprozent eines mindestens trifunktionellen (Meth)acrylats;
c) von 5 bis 45 Gewichtsprozent eines Polythiosl;
d) von 0 bis 10 Gewichtsprozent Dicyandiamid;
e) 0,1 bis 2 Prozent Radikalphotoinitiator;
f) 0,5 bis 1 Gewichtsprozent 2-Alkylimidazol; und
g) 0 bis 5 Prozent Phenolharz.

2. Eine härtbare Zusammensetzung nach Anspruch 1,
wobei die härtbare Zusammensetzung im Wesentlichen frei von Phenolharz ist; und/oder
wobei die härtbare Zusammensetzung im Wesentlichen frei von gelöstem thermoplastischen Polymer ist; und/oder
wobei die härtbare Zusammensetzung im Wesentlichen frei von Dicyandiamid ist;
wobei "im Wesentlichen frei von" bedeutet, dass weniger als ein Gewichtsprozent Phenolharz, gelöstes thermoplastisches Polymer beziehungsweise Dicyandiamid enthalten ist.

3. Ein behandelter Träger, umfassend eine Textilie, die eine Trägerbehandlung aufweist, die mindestens einen Abschnitt davon kontaktiert, wobei die Trägerbehandlung ein Umsetzungsprodukt einer härtbaren Zusammensetzung nach Anspruch 1 oder 2 umfasst.

4. Ein Verfahren zum Erzeugen eines behandelten Trägers, umfassend:
Kontaktieren mindestens eines Abschnitts einer Textilie mit einer härtbaren Zusammensetzung nach Anspruch 1 oder 2; und
mindestens teilweises Härten der härtbaren Zusammensetzung.

5. Ein Schleifgegenstand mit Schleifmittel auf Unterlage, umfassend eine Schleifschicht, die an einer Hauptoberfläche eines behandelten Trägers befestigt ist, wobei die Schleifschicht Schleifteilchen umfasst, die in einem Bindemittel gehalten sind, wobei der behandelte Träger mindestens eine von einer Vordeckschicht, einem Imprägniermittel, oder einer Unterdeckschicht oder einer Haftvermittlerschicht umfasst, die ein Umsetzungsprodukt der härtbaren Zusammensetzung nach Anspruch 1 oder 2 umfasst.

6. Ein Schleifgegenstand mit Schleifmittel auf Unterlage nach Anspruch 5, wobei die Schleifschicht eine Bindemittelschicht, die auf mindestens einem Abschnitt des behandelten Trägers angeordnet ist, Schleifteilchen, die teilweise in die Bindemittelschicht eingebettet sind, und eineDeckchicht, die die Bindemittelschicht und die Schleifteilchen mindestens teilweise überlagert, umfasst.

7. Ein Schleifgegenstand mit Schleifmittel auf Unterlage nach Anspruch 6, ferner umfassend eine Überdeckschicht, die mindestens teilweise auf der Deckschicht angeordnet ist.

8. Ein Verfahren zum Schleifen eines Werkstücks, umfassend:
Bereitstellen eines Schleifgegenstands mit Schleifmittel auf Unterlage nach Anspruch 5;
Reibkontaktieren mindestens eines Abschnitts der Schleifschicht mit mindestens einem Abschnitt einer Oberfläche des Werkstücks; und
Bewegen von mindestens einem von dem Schleifgegenstand mit Schleifmittel auf Unterlage oder dem Werkstück relativ zueinander, um mindestens einen Abschnitt der Oberfläche zu schleifen.

9. Ein Verfahren zum Erzeugen eines Schleifgegenstands mit Schleifmittel auf Unterlage, umfassend:
Anordnen eines härtbaren Trägerbehandlungsvorläufers auf mindestens einen Abschnitt eines Trägers, wobei der härtbare Trägerbehandlungsvorläufer die härtbare Zusammensetzung nach Anspruch 1 oder 2 umfasst;
mindestens teilweises Härten des härtbaren Trägerbehandlungsvorläufers, um einen behandelten Träger bereitzustellen; und
Befestigen einer Schleifschicht an einer Hauptoberfläche des behandelten Trägers, wobei die Schleifschicht Schleifteilchen umfasst, die in einem Bindemittel gehalten werden.

10. Ein Verfahren nach Anspruch 9, wobei der behandelte Träger mindestens eines von einer Vordeckschicht, einer Unterdeckschicht oder einem Imprägniermittel umfasst.

11. ehandelter Träger nach Anspruch 3, ein Verfahren nach Anspruch 4, ein Schleifgegenstand mit Schleifmittel auf Unterlage nach Anspruch 5 oder ein Verfahren nach Anspruch 9, wobei der Träger eine Textilie umfasst, die ein Flächengewicht in einem Bereich von 200 bis 400 Gramm pro Quadratmeter aufweist.

12. Ein Verfahren nach Anspruch 9, wobei die Schleifschicht eine Bindemittelschicht, die auf mindestens einem Abschnitt des behandelten Tägers angeordnet ist, Schleifteilchen, die teilweise in die Bindemittelschicht eingebettet sind, und eine Deckschicht, die die Bindemittelschicht und die Schleifteilchen mindestens teilweise überlagert, umfasst.

13. Ein Verfahren nach Anspruch 12, ferner umfassend eine Überdeckschicht, die mindestens teilweise auf der Deckschicht angeordnet ist.

## Revendications

1. Composition durcissable comprenant des composants comprenant, en fonction du poids total des composants a) à g) :
a) de 45 à 80 pour cent en poids de résine époxy préparable par réaction d'épichlorhydrine avec au moins l'un parmi le bisphénol A ou le bisphénol F ;
b) de 6 à 12 pour cent en poids d'un (méth)acrylate au moins trifonctionnel ;
c) de 5 à 45 pour cent en poids d'un polythiol ;
d) de 0 à 10 pour cent en poids de dicyandiamide ;
e) 0,1 à 2 pour cent de photo-initiateur radicalaire ;
f) 0,5 à 1 pour cent en poids de 2-alkylimidazole ; et
g) 0 à 5 pour cent de résine phénolique.

2. Composition durcissable selon la revendication 1,
dans laquelle la composition durcissable est sensiblement exempte de résine phénolique ; et/ou
dans laquelle la composition durcissable est sensiblement exempte de polymère thermoplastique dissous ; et/ou
dans laquelle la composition durcissable est sensiblement exempte de dicyandiamide ;
dans laquelle « sensiblement exempt » signifie contenant moins d'un pour cent en poids de résine phénolique, de polymère thermoplastique dissous, ou de dicyandiamide, respectivement.

3. Support traité comprenant un tissu ayant un traitement de support en contact avec au moins une partie de celui-ci, dans lequel le traitement de support comprend un produit de réaction d'une composition durcissable selon la revendication 1 ou 2.

4. Procédé de fabrication d'un support traité comprenant :
la mise en contact d'au moins une partie d'un tissu avec une composition durcissable selon la revendication 1 ou 2 ; et
le durcissement au moins partiel de la composition durcissable.

5. Article abrasif revêtu comprenant une couche abrasive fixée sur une surface principale d'un support traité, dans lequel la couche abrasive comprend des particules abrasives retenues dans un liant, dans lequel le support traité comprend au moins l'un parmi une couche de pré-apprêt, un saturant, ou une couche de sous-apprêt, ou une couche de liaison comprenant un produit de réaction de la composition durcissable selon la revendication 1 ou 2 .

6. Article abrasif revêtu selon la revendication 5, dans lequel la couche abrasive comprend une couche de fabrication disposée sur au moins une partie du support traité, des particules abrasives partiellement noyées dans la couche de fabrication, et une couche d'apprêt recouvrant au moins partiellement la couche de fabrication et les particules abrasives.

7. Article abrasif revêtu selon la revendication 6, comprenant en outre une couche de super apprêt disposée sur au moins une partie de la couche d'apprêt.

8. Procédé d'abrasion d'une pièce à usiner comprenant :
la fourniture d'un article abrasif revêtu selon la revendication 5 ;
la mise en contact par frottement d'au moins une partie de la couche abrasive avec au moins une partie d'une surface d'une pièce à usiner ; et
le déplacement d'au moins l'un parmi l'article abrasif revêtu ou la pièce à usiner par rapport à l'autre pour réaliser une abrasion d'au moins une partie de la surface.

9. Procédé de fabrication d'un article abrasif revêtu comprenant :
la disposition d'un précurseur de traitement de support durcissable sur au moins une partie d'un support, le précurseur de traitement de support durcissable comprenant la composition durcissable selon la revendication 1 ou 2 ;
le durcissement au moins partiel du précurseur de traitement de support durcissable afin de fournir un support traité ; et
la fixation d'une couche abrasive sur une surface principale du support traité, dans lequel la couche abrasive comprend des particules abrasives retenues dans un liant.

10. Procédé selon la revendication 9, dans lequel le support traité comprend au moins l'un parmi une couche de pré-apprêt, une couche de sous-apprêt, ou un saturant.

11. Support traité selon la revendication 3, procédé selon la revendication 4, article abrasif revêtu selon la revendication 5, ou procédé selon la revendication 9, dans lequel le support comprend un tissu qui a une masse surfacique comprise dans la plage allant de 200 à 400 grammes par mètre carré.

12. Procédé selon la revendication 9, dans lequel la couche abrasive comprend une couche de fabrication disposée sur au moins une partie du support traité, des particules abrasives partiellement noyées dans la couche de fabrication, et une couche d'apprêt recouvrant au moins partiellement la couche de fabrication et les particules abrasives.

13. Procédé selon la revendication 12, comprenant en outre une couche de super apprêt au moins partiellement disposée sur la couche d'apprêt.
